# FASCICULE DE BREVET EUROPEEN

(11) **EP 2 273 786 B1**
(45) Date de publication et mention de la délivrance du brevet: **05.09.2012**
(21) Numéro de dépôt: 10167198.0
(22) Date de dépôt: 24.06.2010
(51) Int. Cl.: H04N 21/418

(54) **Contrôle d'accès à un contenu numérique**
Kontrolle des Zugangs zu digitalen Inhalten
Access control to digital content

(30) Priorité: 26.06.2009 FR 0954372
(43) Date de publication de la demande: 12.01.2011
(73) Titulaire: FRANCE TELECOM, 75015 Paris (FR)
(72) Inventeur: GUIONNET, Chantal, 35510 Cesson-Sevigne (FR); FEVRIER, Pierre, 35250 St Sulpice la Forêt (FR)
(74) Mandataire: Cabinet Plasseraud

(56) Documents cités:
- EP-A1- 2 063 638
- FR-A1- 2 843 468

## Description

L'invention se rapporte au domaine de la transmission de contenus multimédia dans des réseaux de transmission, et plus particulièrement au contrôle d'accès à ces contenus multimédia.

Les réseaux de transmission de contenus multimédia peuvent être utilisés notamment pour des applications de télévision à péage.

Dans ce type de réseaux de transmission, des contenus multimédia sont transmis de manière chiffrée, et ne peuvent être restitués au niveau d'un terminal récepteur que dans certaines conditions. En effet, l'accès à ces contenus multimédia est généralement contrôlé en fonction de droits d'accès et de critères d'accès.

Dans un tel contexte, un terminal reçoit ses droits via un message unique, qui lui est adressé individuellement. Un tel message peut être un message initial de droits de type EMM (de l'anglais « Entitlement Management Message »). Ce type de message est un message personnalisé qui peut être émis à destination d'un seul abonné ou encore à destination d'un groupe d'abonnés.

Puis, en fonction de ses propres droits, chaque terminal du réseau de transmission peut accéder ou non à certains contenus numériques. En effet, d'un côté le contenu numérique est transmis de manière chiffrée à l'aide d'une clé de chiffrement (ou encore CW pour 'Control Word'), et d'un autre côté la clé de chiffrement est transmise dans un message synchronisé avec la transmission du contenu numérique. Ainsi, afin d'accéder au contenu numérique, il convient de déchiffrer en premier lieu la clé de chiffrement qui lui est associée et qui est reçue dans un message de contrôle d'accès, par exemple de type ECM (de l'anglais « Entitlement Control Message »), synchronisé avec un flux de données transportant le contenu numérique. Ce premier déchiffrement peut être réalisé si le terminal dispose au préalable d'une clé d'exploitation qui lui permet de déchiffrer ce contenu numérique. Cette clé d'exploitation est comprise dans les droits que le terminal a reçus via le message de type EMM. Par conséquent, si les droits du terminal l'autorisent, via la présence de la clé d'exploitation, à déchiffrer la clé de chiffrement reçue en association au contenu numérique, alors il est en mesure de déchiffrer ce contenu numérique.

Dans ces conditions, le contrôle d'accès est effectué sur la base de droits d'accès attribués à chaque terminal.

Par ailleurs, pour certaines applications, ou dans certains systèmes de contrôle d'accès, outre ces droits d'accès, il est prévu de contrôler l'accès à un contenu numérique sur la base complémentaire de critères d'accès. Remplir ces critères d'accès peut correspondre par exemple à vérifier si un abonnement spécifique est présent et valide, ou encore à vérifier si un compte de l'utilisateur du terminal est assez rempli pour pouvoir payer l'accès à un contenu dont le coût, ou débit à effectuer, constitue le critère d'accès.

Ainsi, un terminal peut être autorisé à accéder à un contenu numérique si, d'une part ses droits lui permettent de déchiffrer le contenu numérique reçu, et d'autre part si les critères d'accès à ce contenu numérique sont remplis. Ces critères d'accès sont transmis dans des messages de type ECM de manière synchrone avec le flux de données correspondant. Cette synchronisation est requise dans un contexte de communication "one-to-many" c'est-à-dire d'une communication depuis une source vers une pluralité de récepteurs. Il peut s'agir d'une communication de type "broadcast" ou "multicast" par exemple.

Dans ce contexte, les droits d'accès transmis dans des messages EMM, peuvent être individualisés par abonné, alors que les critères d'accès, transmis dans des messages ECM de diffusion générale, sont communs à tous les abonnés.

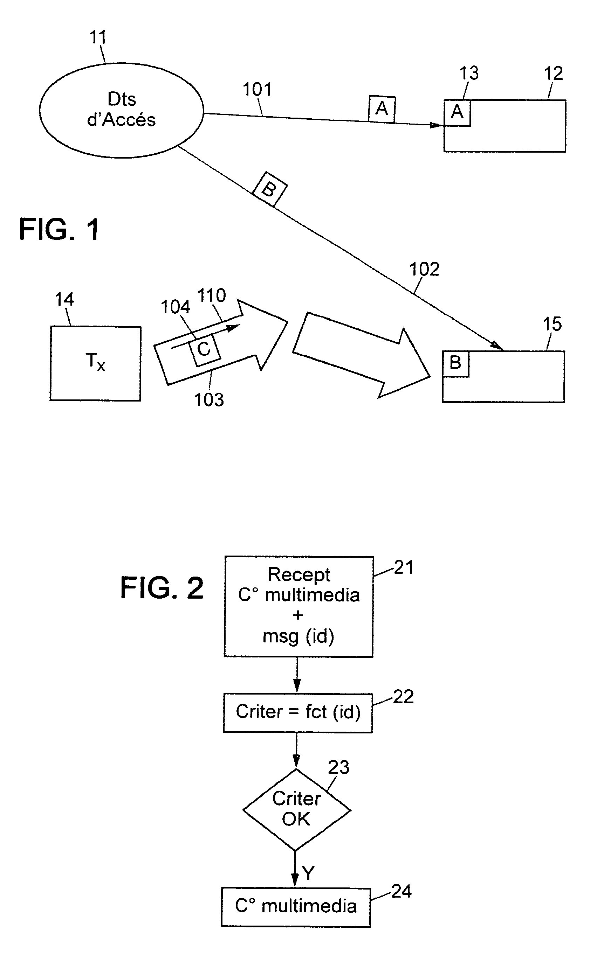

La figure 1 illustre un système de diffusion de contenus numériques à accès contrôlé selon l'art antérieur.

Un tel système comprend une ou plusieurs entités de gestion des droits d'accès 11, une entité de transmission de contenu numérique 14 et des terminaux 12 et 15. L'entité de gestion de droits 11 transmet au terminal 12 un message initial de droit EMM 101 lui transmettant ses propres droits A et au terminal 15 un message initial de droit EMM 102 lui transmettant ses propres droits B.

Puis, l'entité de transmission 14 diffuse de manière générale 104 un contenu numérique vers les terminaux du système 12 et 15. De manière synchrone à cette diffusion générale, des messages ECM 110 de contrôle de droits sont transmis selon la même diffusion générale. Ces messages indiquent des critères d'accès communs à tous les terminaux destinataires de la diffusion générale.

EP 2 063 638 divulgue une gestion de droits d'accès à un contenu numérique diffusé. Un terminal STB comprend un module de contrôle d'accès et un module de sécurité. Le module de sécurité stocke des droits de l'utilisateur qui sont reçus par des messages de type EMM. Ces droits Di sont stockés dans une table de droit Td qui comprend également des index et des identificateurs de droit ID.

FR 2 843 468 divulgue une diffusion de contenu numérique avec contrôle d'accès pour faire des offres d'achat. Dans ce contexte, des messages de contrôle de type ECM sont utilisés. Des critères d'accès sont véhiculés par ces messages de contrôle.

La présente invention vient améliorer la situation.

Un premier aspect de la présente invention propose un procédé de gestion de contrôle d'accès à au moins un contenu numérique en fonction d'au moins un critère d'accès, ledit contenu numérique étant transmis à au moins un terminal sous la forme d'un flux de données ;
dans lequel ledit critère d'accès est stocké en fonction d'un identifiant au niveau du terminal ;
ledit procédé comprenant les étapes suivantes, au niveau dudit terminal :
/a/ recevoir le flux de données en association avec un message indiquant ledit identifiant ;
/b/ récupérer le critère d'accès en mémoire en fonction de l'identifiant reçu dans le message de contrôle ; et
/c/ vérifier si le critère d'accès stocké est satisfait afin, le cas échéant, d'autoriser l'accès au contenu.

On entend par le terme 'terminal' tout type de terminal adapté pour recevoir un flux de données correspondant à la transmission d'un contenu numérique. Un tel terminal peut être un poste de télévision, un ordinateur, un téléphone mobile, etc ...

On entend par les termes 'critères d'accès' tout critère qui peut être pris en compte au niveau du terminal afin d'autoriser ou d'interdire un accès au contenu numérique reçu en fonction de droits individuels du terminal. Un tel critère d'accès peut notamment correspondre à un type d'abonnement. On peut en effet envisager qu'un contenu numérique ne puisse être accessible qu'aux terminaux ayant souscrit un abonnement spécifique associé à ce contenu numérique. On peut également envisager un coût à payer par terminal pour l'accès à un contenu numérique, par exemple dans des applications de télévision de type PPV (pour "Pay Per View"). Dans ce cas, un terminal remplit le critère d'accès si le crédit dont il dispose est supérieur au coût que représente l'accès au contenu numérique. Grâce aux présentes caractéristiques, il est possible que le coût de l'accès à un contenu numérique soit différent en fonction du terminal considéré. Par exemple, on peut souhaiter faire payer un prix moindre l'accès à un contenu numérique pour un terminal qui par ailleurs est un grand 'consommateur' de contenus numériques. Il est également possible d'appliquer un mode de réalisation de la présente invention pour effectuer un contrôle parental ou un contrôle par adresse géographique et ainsi, filtrer certains contenus pour certains terminaux.

On entend par les termes 'contenu numérique' tout contenu qui peut être transmis via un réseau de transmission, tel qu'un contenu audio, un contenu visuel, ou un contenu audiovisuel ou plus généralement multimédia.

Les critères d'accès peuvent ainsi être individualisés aisément, permettant ainsi une grande flexibilité des offres possibles de fourniture de contenus numériques.

Aucune limitation n'est attachée à la présente invention au regard du type de transmission utilisée pour transmettre le flux de données. On peut par exemple envisager une diffusion générale du flux de données. Dans ce cas, un mode de réalisation de la présente invention peut être mis en oeuvre simplement dans un système de contrôle d'accès de contenu numérique de l'art antérieur.

Grâce à ces caractéristiques, il est possible de transmettre à un terminal, dans un réseau de transmission de contenu numérique, des critères d'accès qui lui sont propres, tout en optimisant l'utilisation de la bande passante dans le réseau de transmission utilisé. En effet, il convient de noter que seul un identifiant est transmis en association au flux de données et non pas des critères d'accès qui peuvent, eux, occuper plus de bande passante, et ce d'autant plus si l'on souhaite personnaliser les critères d'accès dans un contexte de diffusion générale. Cet aspect est d'autant plus avantageux que le message considéré est répété souvent. Tel est notamment le cas, lorsque le message considéré est un message de type ECM transportant aussi les CW, comme dans un contexte de diffusion de type TV live, pour lequel les CW doivent être modifiés régulièrement. Dans ce type de contexte, les messages considérés sont répétés fréquemment et le fait qu'ils soient plus courts permet un gain sensible de la bande passante.

En outre, la transmission d'un simple identifiant, qui peut être commun à tous les terminaux du réseau pour un contenu numérique donné, permet avantageusement d'individualiser les critères d'accès par terminal, puisque cet identifiant pointe sur des critères d'accès stockés sur chaque terminal, ces critères d'accès pouvant être différents selon les terminaux du réseau. L'individualisation des critères d'accès est ainsi réalisée tout en réduisant l'occupation de la bande passante du réseau.

Il est ici prévu de stocker au niveau du terminal un critère d'accès ou une liste de critères d'accès en association avec un identifiant. Cet identifiant permet de pointer en mémoire sur les critères d'accès propres à chaque terminal au niveau même de chacun de ces terminaux.

Ainsi, en transmettant cet identifiant en association au flux de données, on est en mesure d'indiquer au terminal des critères d'accès qui lui sont propres pour accéder au contenu numérique qu'il reçoit, quand bien même la transmission de cet identifiant soit effectuée par diffusion générale, ou par multi diffusion. En effet, dans un tel contexte, un même identifiant peut être transmis à un groupe de terminaux ou encore à tous les terminaux du réseau, tout en étant associé, au niveau des terminaux eux-mêmes, à des critères d'accès qui sont propres à chacun des terminaux.

Dans un mode de réalisation de la présente invention, seul un identifiant est transmis dans un message associé au flux de données, à la place de la transmission d'une éventuelle liste de critères d'accès. Par conséquent, les messages associés à la transmission de flux de données sont eux-mêmes réduits, ce qui permet une utilisation optimisée de la bande passante dans le réseau de transmission. En procédant ainsi, il est possible de gérer les critères d'accès de manière individualisée par terminal, tout en réduisant l'encombrement de la bande passante dans le réseau de transmission.

L'identifiant associé à un critère d'accès ou encore à une liste de critères d'accès propres à un terminal peut correspondre à un flux de données numérique donné. Lorsque l'identifiant est transmis de manière de synchrone au flux de données, selon une diffusion générale, tous les terminaux qui souhaitent accéder à ce contenu numérique reçoivent le même identifiant dans des messages associés au flux de données. Toutefois, pour chacun de ces terminaux, cet identifiant commun reçu n'est pas forcément associé aux mêmes critères d'accès. Ainsi, même en utilisant une diffusion générale, les critères d'accès peuvent être personnalisés par terminal.

On peut donc prévoir, dans un mode de réalisation de la présente invention, que les identifiants soient transmis dans des messages de type ECM, de manière synchrone au flux de données.

Aucune limitation n'est attachée au moyen utilisé par le terminal pour stocker le ou les critères d'accès en fonction d'un identifiant. On peut notamment prévoir que le terminal reçoit cette association d'identifiant avec des critères d'accès en la récupérant depuis un support de stockage comme une clé USB par exemple, ou encore par réception d'un message initial préalable à la réception du flux de données transportant le contenu numérique.

Ainsi, dans un mode de réalisation, le procédé comprend en outre les étapes suivantes avant l'étape /a/ :
/i/ recevoir un message initial indiquant au moins le critère d'accès et l'identifiant associé audit critère d'accès ; et
/b/ stocker ledit critère d'accès en association audit identifiant.

Un tel message initial peut être transmis de manière individuelle au terminal. On peut ainsi prévoir de le transmettre via un message initial de droits de type EMM.

Dans un mode de réalisation de la présente invention, le contenu numérique est transmis sous forme chiffrée et le message de contrôle, qui indique l'identifiant, indique en outre une clé de chiffrement dudit contenu numérique.

Ici, le message de contrôle peut correspondre à un message de type ECM. Il peut être envoyé régulièrement pour garantir un renouvellement de la clé de chiffrement, modifiée pour des raisons de sécurité. Il peut en outre être envoyé plus régulièrement, même pendant une période où la clé de chiffrement du contenu numérique n'a pas été modifiée. En effet, ces répétitions de messages de contrôle permettent de réduire le temps d'attente d'un utilisateur du terminal en cas de requête d'un nouveau contenu numérique. Lorsque le contenu numérique correspond à un programme de télévision, ces répétitions d'envoi de messages de contrôle indiquant une même clé de chiffrement, permettent de réduire le temps d'attente lors d'un changement de chaîne de télévision ou encore 'zapping'.

Un deuxième aspect de la présente invention propose un procédé de gestion de contrôle d'accès à au moins un contenu numérique en fonction d'au moins un critère d'accès, ledit contenu numérique étant transmis à au moins un terminal sous la forme d'un flux de données ;
dans lequel ledit critère d'accès est stocké en fonction d'un identifiant au niveau du terminal ;
ledit procédé comprenant l'étape suivante, au niveau d'une entité de gestion de contrôle d'accès :
/i/ transmettre au moins un message de contrôle en association au flux de données, ledit message de contrôle indiquant ledit identifiant.

Ici, un terminal stocke une association entre un identifiant et un ou plusieurs critères d'accès. Ainsi, l'entité de gestion de contrôle d'accès transmet seulement l'identifiant en association au flux de données correspondant au contenu numérique considéré. Puis, par la suite, le terminal est en mesure de récupérer de lui-même les critères d'accès qui doivent être remplis pour accéder à ce contenu numérique. On considère que les critères d'accès sont remplis sur la base de droits d'accès reçus au préalable. Le message de contrôle indiquant cet identifiant peut correspondre à un message de type ECM.

Dans un mode de réalisation de la présente invention, avant l'étape /i/, l'étape suivante est effectuée :
- transmettre un message initial au terminal, ledit message initial indiquant un identifiant associé audit critère d'accès.

Dans un mode de réalisation de la présente invention, le message initial correspond à un message de type EMM qui peut être envoyé de manière individuelle à un terminal. On peut prévoir soit de grouper cet identifiant et des critères associés avec les droits d'accès dans un même message de type EMM, soit encore de transmettre à cet effet deux messages distincts. Quoiqu'il en soit, ces messages peuvent être émis à destination d'un seul terminal ou encore d'un groupe de terminaux.

Ainsi, sur réception d'un message initial, le terminal stocke l'association entre l'identifiant et les critères d'accès. Il suffit par la suite de ne transmettre que l'identifiant de manière groupée, soit en multi diffusion soit encore en diffusion générale, à une pluralité de terminaux. Avantageusement, un seul identifiant peut être utilisé par flux de données transmis, chaque identifiant correspondant à des critères propres aux terminaux, dans des mémoires respectives.

Dans un mode de réalisation de la présente invention, le contenu numérique est transmis sous forme chiffrée et le message de contrôle indique en outre une clé de chiffrement du contenu numérique. Ce message peut être transmis régulièrement dans le temps, pour permettre un temps réduit de changement d'accès à un contenu numérique. Lorsqu'il est prévu de modifier la clé de chiffrement, ce message de contrôle est transmis de manière synchrone avec le flux de données.

Un troisième aspect de la présente invention propose un terminal comprenant des moyens adaptés pour la mise en oeuvre d'un procédé de gestion de contrôle d'accès selon le premier aspect de la présente invention.

Un quatrième aspect de la présente invention propose une entité de gestion de contrôle d'accès comprenant des moyens adaptés pour la mise en oeuvre d'un procédé de gestion de contrôle d'accès selon le deuxième aspect de la présente invention.

Cette entité de gestion de contrôle peut être en charge également de gérer l'allocation des droits d'accès propres à chaque terminal.

Un cinquième aspect de la présente invention propose une entité de transmission de contenu numérique avec contrôle d'accès comprenant des moyens adaptés pour la mise en oeuvre d'un procédé de gestion de contrôle d'accès selon le premier aspect de la présente invention.

Dans un mode de réalisation, l'entité de transmission et l'entité de gestion de contrôle sont co-localisées.

Un sixième aspect de la présente invention propose un système de contrôle d'accès à un contenu numérique, comprenant une entité de gestion de contrôle de d'accès selon le quatrième aspect de la présente invention, une entité de transmission de contenu numérique selon le cinquième aspect de la présente invention et au moins un terminal selon le troisième aspect de la présente invention.

Un septième aspect de la présente invention propose un programme d'ordinateur comportant des instructions pour la mise en oeuvre du procédé selon le premier aspect de la présente invention, lorsque ce programme est exécuté par un processeur.

Un huitième aspect de la présente invention propose un programme d'ordinateur comportant des instructions pour la mise en oeuvre du procédé selon le deuxième aspect de la présente invention, lorsque ce programme est exécuté par un processeur.

Un neuvième aspect de la présente invention propose un message de contrôle d'accès à un contenu numérique, en fonction d'au moins un critère d'accès, ledit contenu numérique étant transmis à au moins un terminal sous la forme d'un flux de données ;
ledit message de contrôle indiquant un identifiant relatif au flux de données, ledit identifiant étant associé audit critère d'accès.

D'autres particularités et avantages de la présente invention apparaîtront dans la description détaillée ci-après, faite en référence aux dessins annexés sur lesquels :
- la figure 1 illustre un système de contrôle d'accès selon l'art antérieur qui est déjà décrit ci-avant ;
- la figure 2 illustre les principales étapes d'un procédé de gestion de contrôle selon un mode de réalisation de la présente invention ;
- la figure 3 illustre un système de contrôle d'accès selon un mode de réalisation de la présente invention ;
- la figure 4 illustre un terminal selon un mode de réalisation de la présente invention ;
- la figure 5 illustre une entité de gestion de contrôle d'accès selon un mode de réalisation de la présente invention ; et
- la figure 6 illustre une entité de transmission de contenu numérique selon un mode de réalisation de la présente invention.

Des références identiques désignent des objets identiques ou similaires d'une figure à l'autre.

La figure 2 illustre les principales étapes d'un procédé de gestion de contrôle selon un mode de réalisation de la présente invention, au niveau d'un terminal d'un système de contrôle d'accès.

Un contenu numérique, qui peut être un contenu multimédia, est transmis via un réseau de transmission à au moins un terminal sous la forme d'un flux de données. Aucune limitation n'est attachée au réseau de transmission utilisé pour cette transmission de contenu numérique.

Dans un exemple particulier de réalisation, qui n'est en rien limitatif, les contenus numériques sont des programmes de télévision transmis en mode 'live' (c'est-à-dire en temps réel, en direct), le réseau de transmission est l'Internet et le terminal comprend un décodeur TV (TV pour TéléVisuel), également appelé STB (Set Top Box).

Un ou des critères d'accès sont préalablement stockés en association avec un identifiant au niveau du terminal. On peut prévoir de faire correspondre un identifiant à un contenu numérique ou encore à une pluralité de contenus numériques. Cet aspect reste avantageusement flexible.

Au niveau du terminal, à une étape 21, on reçoit le contenu numérique sous la forme d'un flux de données chiffré auquel est associé un message de contrôle qui indique un identifiant.

Ensuite, à une étape 22, on récupère le critère d'accès ou les critères d'accès en mémoire en fonction de l'identifiant reçu dans le message. Puis, à une étape 23, on contrôle si le ou les critères d'accès sont remplis sur la base d'une analyse des droits présents. Enfin, à une étape 24, si le ou les critères d'accès sont remplis, alors on décide d'accéder au contenu numérique reçu dans le flux de données.

Dans un système de contrôle d'accès selon un mode de réalisation de la présente invention, le flux de données est transmis selon une diffusion générale à tous les terminaux et le message de contrôle associé est transmis de manière synchrone dans ce flux de données également. Ainsi, l'identifiant est relatif à un contenu numérique. Les critères d'accès préalablement stockés au niveau de chaque terminal peuvent avantageusement être propres à chacun des terminaux.

Un message de contrôle peut correspondre à un message de type ECM et donc être transmis de manière synchrone avec le contenu numérique. Il peut donc indiquer, outre l'identifiant, pointeur vers des critères d'accès propres à chaque terminal, la clé de chiffrement associée au contenu numérique transmis sous une forme chiffrée.

On peut prévoir dans un système de gestion de contrôle d'accès qu'une entité de gestion de contrôle d'accès soit en charge de transmettre à chaque terminal de manière personnelle ou encore groupée, une association entre un identifiant et des critères d'accès, et une entité de transmission de flux qui, elle, est en charge de diffuser le contenu numérique sous la forme d'un flux de données, auquel est synchronisé un message de contrôle qui indique notamment l'identifiant correspondant à ce flux de données. Ce message de contrôle peut avantageusement être répété au cours du temps pendant la diffusion du flux de données.

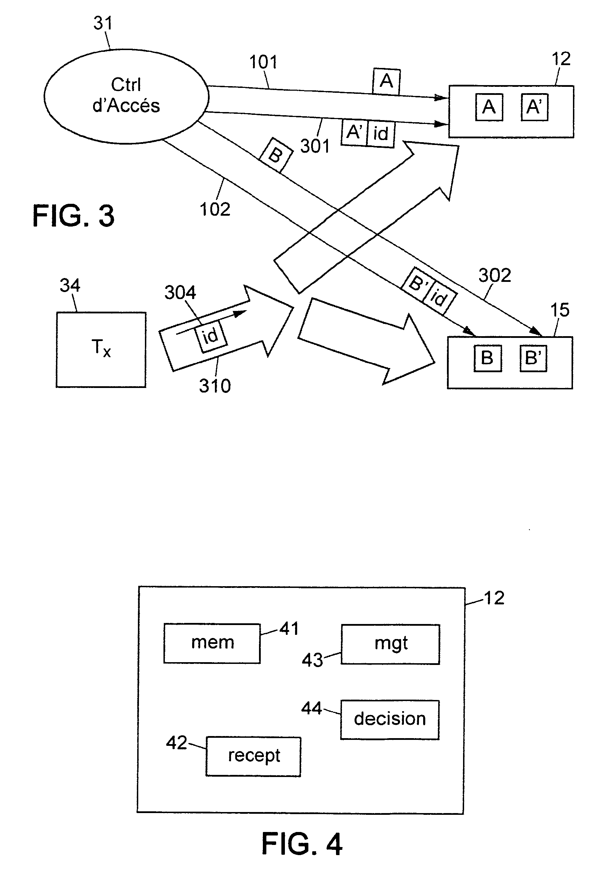

La figure 3 illustre un système de contrôle d'accès à un contenu numérique selon un mode de réalisation de la présente invention.

Un tel système de contrôle d'accès comprend une entité de transmission 34 de contenu numérique sous la forme d'un flux de données à travers un réseau de transmission, selon un mode de réalisation.

Il comprend en outre une entité de gestion de contrôle d'accès 31 pour chacun des terminaux 12 et 15 utilisateurs du système. Ces droits d'accès peuvent être un abonnement d'un type donné pour une période donnée, une réservation de séance particulière, un nombre de jetons permettant ensuite un achat impulsif local, une clé de déchiffrement, etc .....

Cette entité de gestion de contrôle d'accès 31 est adaptée pour transmettre à chacun de ces terminaux leurs droits d'accès respectifs. A cet effet, elle émet des messages 101 et 102 indiquant respectivement les droits d'accès du terminal 12 et les droits d'accès du terminal 15.

Ces messages 101 et 102 peuvent être des messages de type EMM. Ainsi le message initial de droits 101 à destination du terminal 12 indique les droits d'accès A du terminal 12 et le message de droits 102 à destination du terminal 15 indique les droits d'accès B du terminal 15. Ces droits d'accès A et B sont stockés sur les terminaux respectifs.

Afin que les terminaux utilisant ce système de contrôle d'accès reçoivent leurs critères d'accès et l'identifiant qui leur est associé, on peut envisager d'utiliser soit les mêmes messages 101 et 102 ou encore d'autres messages du même type. On peut également prévoir que cette association d'un identifiant avec les critères d'accès soit obtenue au niveau d'un terminal d'une manière quelconque, par exemple par transfert de données physique via une clé de stockage.

Dans l'exemple illustré à la figure 3, des critères d'accès respectifs A' et B' des terminaux 12 et 15, sont transmis via des messages initiaux respectifs 301 et 302. On peut prévoir qu'une pluralité d'identifiants correspondant à une pluralité de contenus numériques ou une pluralité de type d'accès est transmise dans un même message initial ou encore dans des messages initiaux respectifs distincts.

Quelle que soit la méthode mise en oeuvre, à un certain stade du procédé de gestion de contrôle, les terminaux stockent en mémoire, comme par exemple celle d'une carte à puce, d'une part ses droits d'accès, respectivement A ou B, et d'autre part ses critères d'accès, respectivement A' ou B' en association avec un identifiant.

Puis, lorsqu'un terminal requiert un certain contenu numérique, comme par exemple un programme de télévision ou encore un film, il reçoit alors le contenu numérique diffusé par l'entité de transmission sous la forme d'un flux de données 310. A ce flux de données est associé un message de contrôle qui indique un identifiant correspondant au flux de données. Ainsi, sur réception de cet identifiant, chaque terminal récupère ses propres critères d'accès en mémoire.

L'accès au contenu numérique est alors fonction des critères d'accès et des droits d'accès.

Dans un exemple d'application, le terminal d'un système de contrôle d'accès selon un mode de réalisation de la présente invention requiert la réception d'une chaîne de télévision. On souhaite que l'accès au programme diffusé sur cette chaîne de télévision ne soit possible qu'avec un abonnement donné pour certains terminaux et au choix parmi une liste d'abonnements pour d'autres terminaux (critères d'accès). Dans ce cas, le flux de données qui transmet le contenu numérique correspondant au programme de télévision est associé à un flux de messages de contrôle indiquant chacun un seul identifiant associé. Si le terminal a reçu au préalable cet identifiant et des critères associés alors ce sont ces critères personnalisés qui s'appliquent et qui sont vérifiés au regard des droits personnels de chaque terminal pour permettre au terminal d'accéder au contenu numérique correspondant.

Dans un autre exemple d'application, la présente invention est décrite dans son application à un service de télévision en mode PPV (pour "Pay per View"). Le terminal d'un système de contrôle d'accès selon un mode de réalisation de la présente invention requiert la réception d'un film par exemple. Il a en mémoire l'association de l'accès à ce film avec un critère d'accès qui représente le coût de ce film. Ce coût peut être exprimé en nombre de jetons. Puis, il reçoit le flux de données correspondant à ce film et au moins un message de contrôle qui indique l'identifiant. A ce moment, il récupère en mémoire le coût de l'accès à ce film. Il peut alors comparer avec un compte de jetons indiquant son crédit (droit d'accès) et ainsi autoriser ou interdire l'accès à ce film. Ici, il convient de noter que l'on peut avantageusement prévoir que le coût de l'accès à un film peut dépendre du terminal, notamment pour offrir des promotions aux clients importants.

La figure 4 illustre un terminal selon un mode de réalisation de la présente invention. Un tel terminal peut comprendre :
- une mémoire 41 adaptée pour stocker une association entre un identifiant et au moins critère d'accès ;
- une unité de réception 42 adaptée pour recevoir le flux de données en association avec un message de contrôle indiquant ledit identifiant ;
- une unité de gestion de mémoire 43 adaptée pour récupérer le critère d'accès en mémoire en fonction de l'identifiant reçu dans le message de contrôle ; et
- une unité de décision 44 adaptée pour vérifier si le critère d'accès stocké est satisfait et, le cas échéant, autoriser l'accès au contenu numérique reçu dans le flux de données.

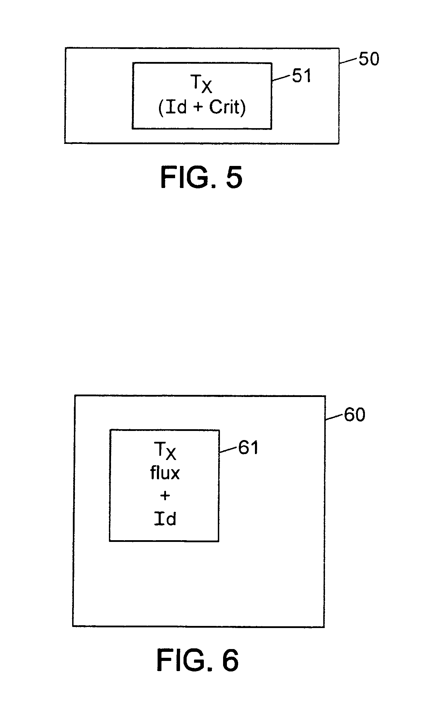

La figure 5 illustre une entité de gestion de contrôle d'accès 50 selon un mode de réalisation de la présente invention. Une telle entité de gestion de contrôle d'accès peut comprendre :
- une unité de transmission 51 adaptée pour transmettre un message initial au terminal, ledit message initial indiquant une association d'un identifiant et dudit critère d'accès.

La figure 6 illustre une entité de transmission de contenu numérique 60 selon un mode de réalisation de la présente invention. Une telle entité de transmission peut comprendre :
- une unité de transmission 61 adaptée pour transmettre un flux de données correspondant au contenu numérique, en association avec au moins un message de contrôle indiquant ledit identifiant.

Dans un mode de réalisation de la présente invention, le terminal a besoin non seulement du CW ou mot de contrôle ou clé de chiffrement du contenu, reçu dans un message classique de type ECM, mais aussi d'un CW supplémentaire, ou clé de chiffrement, qu'il peut avantageusement recevoir dans un message de type EMM transportant l'association d'un identifiant avec des critères d'accès, c'est-à-dire le message initial. On peut ainsi augmenter le degré de sécurité du contrôle.

Il est également possible que les messages de type ECM transportent, outre un identifiant, des critères d'accès supplémentaires. Dans ce cas, on peut combiner les critères d'accès récupérés sur la base de l'identifiant et ceux reçus directement dans le message ECM.

Dans une variante on peut aussi prévoir que les messages initiaux indiquent eux-mêmes des identifiants qui pointent sur d'autres critères déjà stockés en mémoire du terminal considéré. Dans ce cas, le contrôle d'accès à un contenu numérique peut être basé sur une combinaison de critères d'accès reçus dans le message initial et aussi de critères d'accès pointés en mémoire par l'identifiant ou les identifiants reçus dans le message initial.

Dans un exemple, on prévoit de faire dépendre l'accès à un contenu numérique par exemple d'un abonnement 1 qui serait reçu par un message initial selon un mode de réalisation de la présente invention et d'un abonnement 2 qui lui serait reçu dans un message de type ECM de diffusion générale associé au flux de données.

Seuls quelques exemples sont décrits explicitement ci-avant. Toutefois, une grande flexibilité d'offres et de combinaisons d'offres est permise grâce aux caractéristiques de la présente invention.

## Revendications

1. Procédé de gestion de contrôle d'accès à au moins un contenu numérique en fonction d'au moins un critère d'accès (A', B'), ledit contenu numérique étant transmis à au moins un terminal (12, 15) sous la forme d'un flux de données ;
dans lequel ledit critère d'accès est stocké en mémoire en association avec un identifiant (id) au niveau du terminal, ledit identifiant étant un pointeur vers ledit critère d'accès ;
ledit procédé comprenant les étapes suivantes, au niveau dudit terminal :
/a/ recevoir (21) le flux de données en association avec un message de contrôle (304) transmettant ledit identifiant ;
/b/ récupérer (22) le critère d'accès en mémoire en fonction de l'identifiant reçu dans le message de contrôle ; et
/c/ vérifier si le critère d'accès stocké est satisfait afin, le cas échéant, d'autoriser l'accès au contenu.

2. Procédé de gestion de contrôle d'accès selon la revendication 1, comprenant en outre les étapes suivantes avant l'étape /a/ :
/i/ recevoir un message initial (301, 302) transmettant au moins le critère d'accès (A', B') et l'identifiant (id) associé audit critère d'accès ;
/ii/ stocker ledit critère d'accès en association audit identifiant.

3. Procédé de gestion de contrôle d'accès selon la revendication 1, dans lequel le contenu numérique est transmis sous forme chiffrée (310) et le message de contrôle (304) indique en outre une clé de chiffrement dudit contenu numérique.

4. Procédé de gestion de contrôle d'accès à au moins un contenu numérique en fonction d'au moins un critère d'accès (A', B') au niveau d'un terminal (12, 15),
dans lequel ledit critère d'accès est stocké en association avec un identifiant (id) au niveau du terminal, ledit identifiant étant un pointeur vers ledit critère d'accès ;
ledit procédé comprenant l'étape suivante, au niveau d'une entité de transmission de flux de données :
- transmettre un flux de données (310) correspondant au contenu numérique, en association avec au moins un message de contrôle (304) transmettant ledit identifiant.

5. Procédé de gestion de contrôle d'accès selon la revendication 4, dans lequel le contenu numérique est transmis sous forme chiffrée et le message de contrôle (304) indique en outre une clé de chiffrement dudit contenu numérique.

6. Procédé de gestion de contrôle d'accès à au moins un contenu numérique en fonction d'au moins un critère d'accès (A', B') au niveau d'un terminal (12, 15) ;
dans lequel ledit critère d'accès est stocké en association avec un identifiant (id) au niveau du terminal, ledit identifiant étant un pointeur vers ledit critère d'accès ;
ledit procédé comprenant l'étape suivante au niveau d'une entité de gestion de contrôle d'accès (50) :
- transmettre un message initial (301, 302) au terminal, ledit message initial transmettant une association d'un identifiant (id) et dudit critère d'accès.

7. Terminal (12, 15) adapté pour accéder à un contenu numérique selon une gestion de contrôle d'accès basée sur au moins un critère d'accès (A', B'), ledit contenu numérique étant transmis à au moins un terminal sous la forme d'un flux de données (310) ;
ledit terminal comprenant :
- une mémoire (41) adaptée pour stocker en mémoire une association entre un identifiant (id) et au moins un critère d'accès, ledit identifiant étant un pointeur vers ledit au moins un critère d'accès ;
- une unité de réception (42) adaptée pour recevoir le flux de données en association avec un message de contrôle (304) transmettant ledit identifiant ;
- une unité de gestion de mémoire (43) adaptée pour récupérer le critère d'accès en mémoire en fonction de l'identifiant reçu dans le message de contrôle ; et
- une unité de décision (44) adaptée pour vérifier si le critère d'accès stocké est satisfait et, le cas échéant, autoriser l'accès au contenu numérique reçu dans le flux de données.

8. Entité de gestion de contrôle d'accès (50) à au moins un contenu numérique en fonction d'au moins un critère d'accès au niveau d'un terminal (12,15); dans lequel ledit critère d'accès est stocké en association avec un identifiant (id) au niveau du terminal, ledit identifiant étant un pointeur vers ledit critère d'accès;
ladite entité de gestion de contrôle d'accès comprenant :
- une unité de transmission (51) adaptée pour transmettre un message initial au terminal, ledit message initial transmettant une association d'un identifiant (id) et dudit critère d'accès.

9. Entité de transmission de contenu numérique (60) à accès contrôlé en fonction d'au moins un critère d'accès (A', B') au niveau d'un terminal (12, 13), dans lequel ledit critère d'accès est stocké en association avec un identifiant (id) au niveau du terminal, ledit identifiant étant un pointeur vers ledit critère d'accès ;
ladite entité de transmission comprenant :
- une unité de transmission (61) adaptée pour transmettre un flux de données correspondant au contenu numérique, en association avec au moins un message de contrôle (304) transmettant ledit identifiant (id).

10. Système de contrôle d'accès à un contenu numérique, comprenant une entité de gestion de contrôle d'accès (50) selon la revendication 8, une entité de transmission de contenu numérique (60) selon la revendication 9 et au moins un terminal (12, 15) selon la revendication 7.

11. Programme d'ordinateur comportant des instructions pour la mise en oeuvre du procédé selon la revendication 1, lorsque ce programme est exécuté par un processeur.

12. Programme d'ordinateur comportant des instructions pour la mise en oeuvre du procédé selon la revendication 4, lorsque ce programme est exécuté par un processeur.

13. Message de contrôle d'accès (304) à un contenu numérique, en fonction d'au moins un critère d'accès (A', B'), ledit contenu numérique étant transmis à au moins un terminal (12, 15) sous la forme d'un flux de données (310) ;
ledit critère d'accès étant stocké en association avec un identifiant (id) au niveau du terminal ;
ledit message de contrôle transmettant ledit identifiant (id) relatif au flux de données, ledit identifiant étant associé audit critère d'accès en ce qu'il est un pointeur vers ledit critère d'accès.

## Claims

1. Method for managing controlled access to at least one digital content on the basis of at least one access criterion (A', B'), said digital content being transmitted to at least one terminal (12, 15) in the form of a datastream;
in which said access criterion is stored in memory in association with an identifier (id) on the terminal, said identifier being a pointer to said access criterion;
said method comprising the following steps, on said terminal:
/a/ receiving (21) the datastream in association with a control message (304) transmitting said identifier;
/b/ recovering (22) the access criterion in memory on the basis of the identifier received in the control message; and
/c/ checking whether the stored access criterion is satisfied in order, where appropriate, to authorize access to the content.

2. Access control management method according to Claim 1, also comprising the following steps before the step /a/:
/i/ receiving an initial message (301, 302) transmitting at least the access criterion (A', B') and the identifier (id) associated with said access criterion;
/ii/ storing said access criterion in association with said identifier.

3. Access control management method according to Claim 1, in which the digital content is transmitted in encrypted form (310) and the control message (304) also indicates an encryption key for said digital content.

4. Method for managing controlled access to at least one digital content on the basis of at least one access criterion (A', B') on a terminal (12, 15),
in which said access criterion is stored in association with an identifier (id) on the terminal, said identifier being a pointer to said access criterion; said method comprising the following step, on a datastream transmission entity:
- transmitting a datastream (310) corresponding to the digital content, in association with at least one control message (304) transmitting said identifier.

5. Access control management method according to Claim 4, in which the digital content is transmitted in encrypted form and the control message (304) also indicates an encryption key for said digital content.

6. Method for managing controlled access to at least one digital content on the basis of at least one access criterion (A', B') on a terminal (12, 15);
in which said access criterion is stored in association with an identifier (id) on the terminal, said identifier being a pointer to said access criterion; said method comprising the following step on an access control management entity (50):
- transmitting an initial message (301, 302) to the terminal, said initial message transmitting an association of an identifier (id) and said access criterion.

7. Terminal (12, 15) suitable for accessing a digital content according to an access control management based on at least one access criterion (A', B'), said digital content being transmitted to at least one terminal in the form of a datastream (310);
said terminal comprising:
- a memory (41) suitable for storing in memory an association between an identifier (id) and at least one access criterion, said identifier being a pointer to said at least one access criterion;
- a reception unit (42) suitable for receiving the datastream in association with a control message (304) transmitting said identifier;
- a memory management unit (43) suitable for recovering the access criterion in memory on the basis of the identifier received in the control message; and
- a decision unit (44) suitable for checking whether the stored access criterion is satisfied and, where appropriate, authorizing access to the digital content received in the datastream.

8. Entity for managing controlled access (50) to at least one digital content on the basis of at least one access criterion on a terminal (12, 15);
in which said access criterion is stored in association with an identifier (id) on the terminal, said identifier being a pointer to said access criterion; said access control management entity comprising:
- a transmission unit (51) suitable for transmitting an initial message to the terminal, said initial message transmitting an association of an identifier (id) and said access criterion.

9. Entity for transmitting digital content (60) with controlled access on the basis of at least one access criterion (A', B') on a terminal (12, 13),
in which said access criterion is stored in association with an identifier (id) on the terminal, said identifier being a pointer to said access criterion;
said transmission entity comprising:
- a transmission unit (61) suitable for transmitting a datastream corresponding to the digital content, in association with at least one control message (304) transmitting said identifier (id).

10. System for controlled access to a digital content, comprising an access control management entity (50) according to Claim 8, a digital content transmission entity (60) according to Claim 9 and at least one terminal (12, 15) according to Claim 7.

11. Computer program comprising instructions for implementing the method according to Claim 1, when this program is run by a processor.

12. Computer program comprising instructions for implementing the method according to Claim 4, when this program is run by a processor.

13. Access control message (304) for controlled access to a digital content, based on at least one access criterion (A', B'), said digital content being transmitted to at least one terminal (12, 15) in the form of a datastream (310);
said access criterion being stored in association with an identifier (id) on the terminal;
said control message transmitting said identifier (id) relating to the datastream, said identifier being associated with said access criterion in that it is a pointer to said access criterion.

## Patentansprüche

1. Verfahren für die Steuerung der Kontrolle des Zugriffs auf wenigstens einen digitalen Inhalt als Funktion wenigstens eines Zugriffskriteriums (A', B'), wobei der digitale Inhalt an wenigstens ein Endgerät (12, 15) in Form eines Datenflusses übertragen wird;
wobei das Zugriffskriterium in Zuordnung zu einer Kennung (id) auf Seiten des Endgeräts gespeichert ist, wobei die Kennung ein Zeiger auf das Zugriffskriterium ist;
wobei das Verfahren auf Seiten des Endgeräts die folgenden Schritte umfasst:
/a/ Empfangen (21) des Datenflusses in Zuordnung zu einer Kontrollnachricht (304), die die Kennung überträgt;
/b/ Wiedergewinnen (22) des gespeicherten Zugriffskriteriums als Funktion der in der Kontrollnachricht empfangenen Kennung; und
/c/ Verifizieren, ob das gespeicherte Zugriffskriterium erfüllt ist, um gegebenenfalls den Zugriff auf den Inhalt zuzulassen.

2. Zugriffskontrolle-Steuerverfahren nach Anspruch 1, das außerdem vor dem Schritt /a/ die folgenden Schritte umfasst:
/i/ Empfangen einer anfänglichen Nachricht (301, 302), die wenigstens das Zugriffskriterium (A', B') und die diesem Zugriffskriterium zugeordnete Kennung (id) überträgt;
/ii/ Speichern des Zugriffskriteriums in Zuordnung zu der Kennung.

3. Zugriffskontrolle-Steuerverfahren nach Anspruch 1, wobei der digitale Inhalt in verschlüsselter Form (310) übertragen wird und die Steuernachricht (304) außerdem einen Verschlüsselungsschlüssel für den digitalen Inhalt angibt.

4. Verfahren für die Steuerung der Kontrolle des Zugriffs auf wenigstens einen digitalen Inhalt als Funktion wenigstens eines Zugriffskriteriums (A', B') auf Seiten eines Endgeräts (12, 15), wobei das Zugriffskriterium in Zuordnung zu einer Kennung (id) auf Seiten des Endgeräts gespeichert ist, wobei die Kennung ein Zeiger auf das Zugriffskriterium ist;
wobei das Verfahren auf Seiten einer Entität für die Übertragung eines Datenflusses den folgenden Schritt umfasst:
- Übertragen eines Datenflusses (310), der dem digitalen Inhalt entspricht, in Zuordnung zu wenigstens einer Kontrollnachricht (304), die die Kennung überträgt.

5. Zugriffskontrolle-Steuerverfahren nach Anspruch 4, wobei der digitale Inhalt in verschlüsselter Form übertragen wird und die Kontrollnachricht (304) außerdem einen Verschlüsselungsschlüssel für den digitalen Inhalt angibt.

6. Verfahren für die Steuerung der Kontrolle des Zugriffs auf wenigstens einen digitalen Inhalt als Funktion wenigstens eines Zugriffskriteriums (A', B') auf Seiten eines Endgeräts (12, 15);
wobei das Zugriffskriterium in Zuordnung zu einer Kennung (id) auf Seiten des Endgeräts gespeichert ist, wobei die Kennung ein Zeiger auf das Zugriffskriterium ist;
wobei das Verfahren auf Seiten einer Entität für die Steuerung der Zugriffskontrolle (50) den folgenden Schritt umfasst:
- Übertragen einer anfänglichen Nachricht (301, 302) an das Endgerät, wobei die anfängliche Nachricht eine Zuordnung einer Kennung (id) und des Zugriffskriteriums überträgt.

7. Endgerät (12, 15), das dafür ausgelegt ist, auf einen digitalen Inhalt in Übereinstimmung mit einer Zugriffskontrolle-Steuerung zuzugreifen, die auf wenigstens einem Zugriffskriterium (A', B') beruht, wobei der digitale Inhalt an wenigstens ein Endgerät in Form eines Datenflusses (310) übertragen wird;
wobei das Endgerät Folgendes umfasst:
- einen Speicher (41), der dafür ausgelegt ist, eine Zuordnung zwischen einer Kennung (id) und wenigstens einem Zugriffskriterium zu speichern, wobei die Kennung ein Zeiger auf das wenigstens eine Zugriffskriterium ist;
- eine Empfangseinheit (42), die dafür ausgelegt ist, den Datenfluss in Zuordnung zu einer Kontrollnachricht (304), die die Kennung überträgt, zu empfangen;
- eine Speichersteuereinheit (43), die dafür ausgelegt ist, das gespeicherte Zugriffskriterium als Funktion der in der Kontrollnachricht empfangenen Kennung wiederzugewinnen; und
- eine Entscheidungseinheit (44), die dafür ausgelegt ist, zu verifizieren, ob das gespeicherte Zugriffskriterium erfüllt ist, und um gegebenenfalls den Zugriff auf den digitalen Inhalt, der in dem Datenfluss empfangen wird, zuzulassen.

8. Entität für die Steuerung der Zugriffskontrolle (50) auf wenigstens einen digitalen Inhalt als Funktion wenigstens eines Zugriffskriteriums auf Seiten eines Endgeräts (12, 15);
wobei das Zugriffskriterium in Zuordnung zu einer Kennung (id) auf Seiten des Endgeräts gespeichert ist, wobei die Kennung ein Zeiger auf das Zugriffskriterium ist;
wobei die Zugriffskontrolle-Steuerentität Folgendes umfasst:
- eine Übertragungseinheit (51), die dafür ausgelegt ist, eine anfängliche Nachricht an das Endgerät zu übertragen, wobei die anfängliche Nachricht eine Zuordnung einer Kennung (id) und des Zugriffskriteriums überträgt.

9. Entität für die Übertragung von digitalem Inhalt (60) mit kontrolliertem Zugriff als Funktion wenigstens eines Zugriffskriteriums (A', B') auf Seiten eines Endgeräts (12, 13), wobei das Zugriffskriterium in Zuordnung zu einer Kennung (id) auf Seiten des Endgeräts gespeichert ist, wobei die Kennung ein Zeiger auf das Zugriffskriterium ist;
wobei die Übertragungsentität Folgendes umfasst:
- eine Übertragungseinheit (61), die dafür ausgelegt ist, einen Datenfluss, der dem digitalen Inhalt entspricht, in Zuordnung zu wenigstens einer Kontrollnachricht (304), die die Kennung (id) überträgt, zu übertragen.

10. System für die Steuerung des Zugriffs auf einen digitalen Inhalt, das eine Entität für die Steuerung einer Zugriffskontrolle (50) nach Anspruch 8, eine Einheit für die Übertragung von digitalem Inhalt (60) nach Anspruch 9 und wenigstens ein Endgerät (12, 15) nach Anspruch 7 umfasst.

11. Computerprogramm, das Befehle enthält, um das Verfahren nach Anspruch 1 auszuführen, wenn dieses Programm von einem Prozessor ausgeführt wird.

12. Computerprogramm, das Befehle enthält, um das Verfahren nach Anspruch 4 auszuführen, wenn dieses Programm von einem Prozessor ausgeführt wird.

13. Nachricht (304) für die Kontrolle des Zugriffs auf einen digitalen Inhalt als Funktion wenigstens eines Zugriffskriteriums (A', B'), wobei der digitale Inhalt an wenigstens ein Endgerät (12, 15) in Form eines Datenflusses (310) übertragen wird;
wobei das Zugriffskriterium in Zuordnung zu einer Kennung (id) auf Seiten des Endgeräts gespeichert ist;
wobei die Kontrollnachricht die auf den Datenfluss bezogene Kennung (id) überträgt, wobei die Kennung dem Zugriffskriterium insofern zugeordnet ist, als sie ein Zeiger auf dieses Zugriffskriterium ist.
